# EUROPEAN PATENT SPECIFICATION

(11) **EP 3 159 610 B1**
(45) Date of publication and mention of the grant of the patent: **17.10.2018**
(21) Application number: 16194655.3
(22) Date of filing: 19.10.2016
(51) Int. Cl.: F24C 15/00, F24C 15/04, A21B 3/10, A21B 3/02

(54) **OVEN FOR COOKING FOOD**
OFEN ZUM GAREN VON NAHRUNGSMITTELN
FOUR DE CUISSON POUR ALIMENTS

(30) Priority: 19.10.2015 IT UB20155043
(43) Date of publication of application: 26.04.2017
(73) Proprietor: Piron S.r.l., 35010 Cadoneghe (PD) (IT)
(72) Inventor: TOMMASIN, Italo, 35010 VIGODARZERE (IT)
(74) Representative: Bongiovanni, Simone

(56) References cited:
- EP-A1- 2 653 786
- EP-A2- 0 985 884
- WO-A1-2014/118295
- DE-A1-102008 043 722
- DE-U1-202008 000 135

## Description

The present invention concerns an oven for cooking food.

Ovens are known for cooking food comprising: a supporting casing defining a rectangular front opening closed by a door angularly movable with respect to the casing about a rotation axis parallel to a first side of the door;
an internal covering housed inside the supporting casing and defining on the inside thereof a cooking chamber accessible through the front opening; a heat insulating layer arranged in the gap defined between the internal covering and the supporting casing; and a device adapted to generate a flow of heat towards the cooking chamber.

In recent applications, the oven door is provided with active electronic components, for example a touch screen display for control of the functions performed by the oven. Said electronic components are heat-sensitive and must be adequately insulated to prevent damage thereof by the thermal energy which is irradiated from the inside of the oven. In the applications of known type, said electronic components are thermally insulated by arranging an insulating portion inside the door, for example fibreglass. Said insulation method does not permit the use of sheets of glass for production of the doors to allow the cooking chamber to be viewed from the outside of the oven.

Relevant ovens are found in DE 102008043722 A1, EP 0985884 A2 and DE 202008000135 U1, where the later discloses the closest prior art.

The object of the present invention is to produce an oven provided with a transparent door able to simply and safely house electronic components, such as a touch screen and a series of light emitting diodes used to illuminate the inside of the cooking chamber.

The above object is achieved by the present invention since the latter concerns an oven for cooking food comprising: a supporting casing defining a front opening closed by a door angularly movable with respect to the casing about a rotation axis parallel to a first side of the door; an internal covering housed inside the supporting casing and defining on the inside thereof a cooking chamber accessible through the front opening; a layer of heat insulation arranged in the gap defined between the internal covering and the supporting casing; heating means adapted to generate a flow of heat towards the cooking chamber, **characterised in that** said door comprises: a first inner sheet of glass adapted, in use, to face the cooking chamber; a second outer sheet of glass adapted, in use, to face the outside of the oven; a supporting frame for supporting the first and second sheet adapted to maintain the first and the second sheet parallel to each other defining a parallelepiped gap open towards the outside of the frame; a flat heat insulation housed inside the gap at a first portion of the gap; an intermediate sheet of glass provided with heat insulation housed inside the gap at a second portion of the gap arranged at one side of the first portion; a touch screen display housed inside the gap and arranged between the flat heat insulation and the outer sheet to be visible and operable through the outer sheet; a plurality of light emitting diodes housed inside the gap and arranged between the intermediate sheet and the outer sheet to illuminate the cooking chamber.

The invention will now be illustrated with reference to the accompanying drawings which represent a non-limiting preferred embodiment thereof wherein:
figure 1 illustrates, in a partially exploded perspective view, the door of an oven for cooking food produced according to the teachings of the present invention;
figure 2 illustrates, in a perspective view, the door of figure 1;
figure 3 illustrates a section of the oven of figure 2 according to plane A-A;
figure 4 illustrates a section of the oven of figure 2 according to plane B-B; and
figure 5 illustrates a section of the oven of figure 2 according to plane C-C.

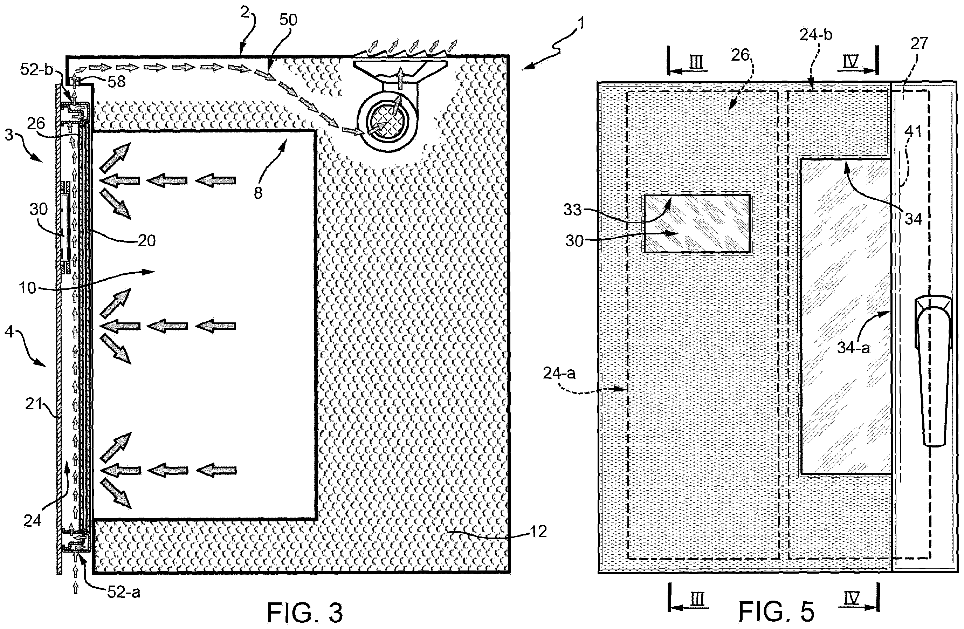

**In** **figure 3** the number 1 indicates, overall, an oven for cooking food.

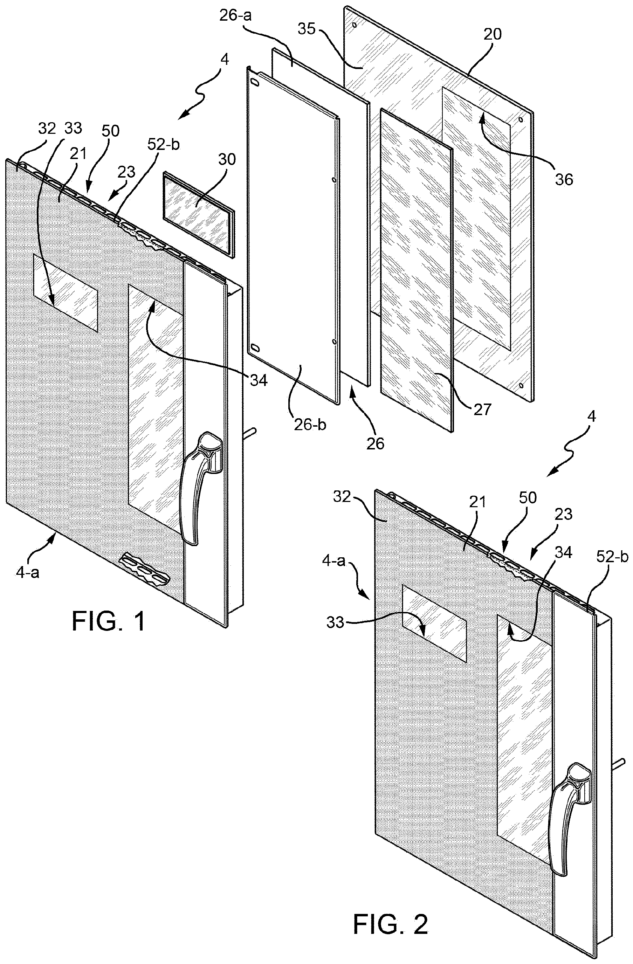

The oven 1 comprises a parallelepiped supporting casing 2 of known type made of metal (for example steel) and defining a rectangular front opening 3 closed by a rectangular door 4 (the door is illustrated in figures 1 and 2 in an isolated manner) angularly movable with respect to the casing 2 about a vertical rotation axis parallel and adjacent to a first side 4-a of the door 4.

The oven 1 further comprises an internal covering 8 formed by flat rectangular metal walls (typically made of steel) housed inside the casing 2 and parallel to the walls which define the supporting casing 2. The internal covering 8 defines in the inside thereof a parallelepiped cooking chamber 10 accessible through the front opening 3 and receiving a flow of heat by means of heating means (of known type and therefore not illustrated).

A heat insulating layer 12 (typically glass wool) is arranged in the gap 14 delimited between the internal covering 8 and the walls that define the supporting casing 2.

According to the present invention the door 4 comprises:
a first rectangular inner sheet 20 of glass adapted, in use, to face the cooking chamber 10;
a second rectangular outer sheet 21 of glass adapted, in use, to face the outside of the oven 1;
a supporting frame 23 of the first and second sheet 20, 21 adapted to maintain the first and the second sheet 20, 21 parallel to each other defining a parallelepiped gap 24 (see figure 3) open towards the outside of the frame 23;
a flat heat insulation 26 housed inside the gap at a first portion 24-a (see figure 5, the outline of the first portion is indicated by the broken line) of the gap - the heat insulation 26 is ultra-slim (thickness approximately 5mm) and high-performing to block the heat component due to the irradiation coming from the cooking chamber 10;
an intermediate sheet of glass 27 provided with heat insulation housed inside the gap at a second portion 24-b (see figure 5, the outline of the second portion is indicated by the broken line) of the gap 24 arranged at one side of the first portion 24-a - the intermediate sheet of glass 27 attenuates the heat component due to the irradiation coming from the cooking chamber 10;
a touch screen display 30 housed inside the gap 24 and arranged between the flat heat insulation 26 and the outer sheet 21 to be visible and operable through the outer sheet 21;
a plurality of light emitting diodes 31 housed inside the gap 24 and arranged between the intermediate sheet 27 and the outer sheet 21 and adapted to illuminate the cooking chamber 10.

The second sheet of glass 21 is provided with a covering layer 32 impervious to the light (for example produced by screen printing or a heat-resistant film deposited on an inner face of the second sheet of glass 21) which defines a first rectangular window 33 facing the touch screen display 30 and a second rectangular window 34 facing the intermediate sheet 27 to allow viewing of the cooking chamber 10 from the outside of the oven 1.

The first sheet of glass 27 is provided with a covering layer 35 impervious to the light (for example produced by means of screen printing or a heat-resistant film deposited on an inner face of the first sheet of glass 27) which defines a third rectangular window 36 which has the same dimensions as the second window 34 and faces the latter; in this way the cooking chamber 10 can be seen through the second window 34 and the third window 36.

Suitably the light emitting diodes 31 are carried by an elongated support 40 housed in the gap 24 and glued to an upright (not illustrated) of the supporting frame; the light emitting diodes 31 are aligned along a rectilinear path 41 (figure 5) which is arranged parallel to a rectilinear edge 34-a of the second window 34, in particular a vertical rectilinear edge. The elongated support 40 faces a portion of the second sheet 21 covered by the covering layer 32 so as not to be visible from the outside of the door 4.

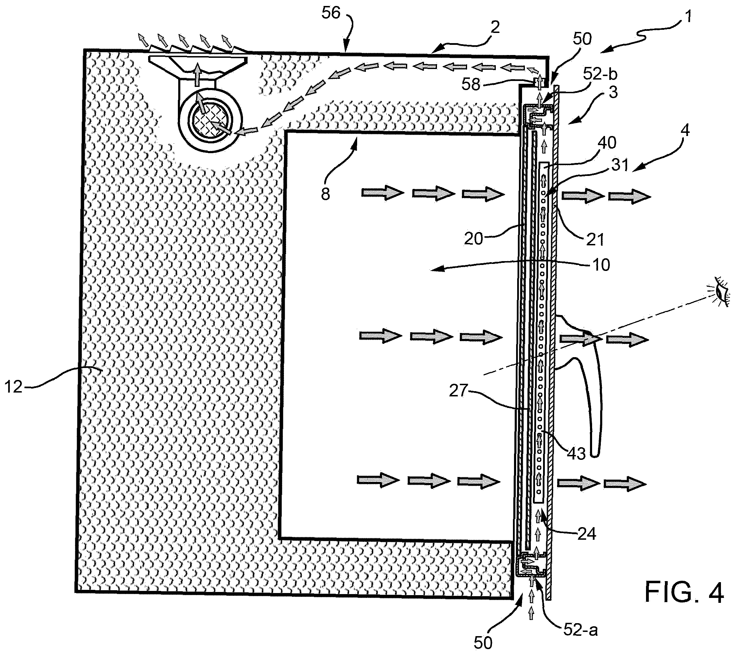

The elongated support further carries a reflector element 43 (of known type and therefore illustrated schematically in figure 4) adapted to direct the radiation emitted by the diodes (as is known the emission of the light emitting diodes is not polarized) towards the first sheet of glass 20 and therefore towards the cooking chamber 10.

The supporting frame 23 comprises a pair of rectilinear vertical uprights and a pair of first/second rectilinear cross members 50 provided with a plurality of first/second through openings 52-a/52-b aligned along the cross member 50. Said first/second openings 52-a/52-b allow connection of the gap 24 with the outside of the door 4. The door 4 is available in a closed position (figures 3 and 4) in which the first openings 52-a communicate with the environment outside the oven 1 and the second openings 52-b communicate with the inlet of an air suction system 56 (represented schematically) housed inside the supporting casing 2 and adapted to produce an air flow which is drawn in through the opening 52-a and flows through the gap 24 cooling the touch screen display 30 and the light emitting diodes 31 before flowing out through the openings 52-b.

Suitably the inlet of the suction system 56 (in the example it is forced and uses a fan, but it could also be a natural circulation system) is provided by an elongated rectangular mouth 58 made in a portion of the casing which is arranged facing the upper cross member 50 when the door 4 is arranged in the closed position.

Suitably the flat heat insulation 26 comprises a ceramic insulating sheet 26-a with low heat conductivity carried by a flat aluminium heat sink 26-b arranged facing the second sheet 21.

The oven door produced as above has the following advantages: o high protection of the touch screen 30 and of the light emitting diodes 31 from the heat coming from the cooking chamber;
o good visibility of the touch screen 30 and of the cooking chamber;
o reduced thickness;
o attractive design; and
o simple and robust structure.

## Claims

1. Oven for cooking food, comprising:
a supporting casing (1) defining a front opening (3) closed by a door (4) angularly movable with respect to the casing (1) about a rotation axis (6) parallel to a first side (4-a) of the door (4);
an internal covering (8) housed inside the supporting casing (1) and defining on the inside thereof a cooking chamber (10) accessible through the front opening (3);
a heat insulating layer (12) arranged in the gap (14) defined between the internal covering (8) and the supporting casing (2) ;
heating means adapted to generate a flow of heat towards the cooking chamber (10),
**characterised in that** said door (4) comprises:
a first inner sheet (20) of glass adapted, in use, to face the cooking chamber (10);
a second outer sheet (21) of glass adapted, in use, to face the outside of the oven (1);
a supporting frame (23) of the first and of the second sheet (20, 21) adapted to maintain the first and the second sheet (20, 21) parallel to each other defining a parallelepiped gap (24) open towards the outside of the frame (23);
a flat heat insulation (26) housed inside the gap (24) at a first portion (24-a) of the gap (24);
an intermediate sheet of glass (27) provided with heat insulation housed inside the gap (24) at a second portion of the gap (24-b) arranged at one side of the first portion (24-a) ;
a touch screen display (30) housed inside the gap (24) and arranged between the flat heat insulation (26) and the outer sheet (21) to be visible and operable through the outer sheet (21) ;
a plurality of light emitting diodes (31) housed inside the gap (24) and arranged between the intermediate sheet (27) and the outer sheet (21) to illuminate the cooking chamber (10).

2. Oven according to claim 1, wherein the second sheet of glass is provided with a covering layer (32) impervious to light arranged on an inner face of the second sheet of glass (21) that defines a first window (33) facing the touch screen display (30) and a second window (34) facing the intermediate sheet (27) to allow viewing of the cooking chamber (10) from outside the oven.

3. Oven according to claim 2, wherein the first sheet of glass (27) is provided with a covering layer (35) impervious to light arranged on an inner face of the first sheet of glass (27) that defines a third rectangular window (36) with the same dimensions as the second window (34) and faces this; the cooking chamber (10) is visible through the second window (34) and the third window (36).

4. Oven according to claim 2 or 3, wherein the light emitting diodes (31) are carried by an elongated support (40) housed in the gap (14); the light emitting diodes (31) are aligned along a rectilinear path (41) that is arranged parallel to a rectilinear edge (34-a) of the second window (34); the elongated support (40) is facing a portion of the second sheet (21) covered by the covering layer impervious to light (32) so that it is not visible from the outside of the door (4).

5. Oven according to claim 4, wherein the elongated support (40) carries a reflector element (43) adapted to direct the radiation emitted by the diodes towards the first sheet of glass (20) and therefore towards the cooking chamber (10).

6. Oven according to any one of the preceding claims, wherein the supporting frame (23) defines first/second through openings (52-a/52-b) that allow connection of the gap (24) with the outside of the door (4); the door (4) is arranged in a closed position in which the first opening (52-a) communicates with the environment outside the oven (1) and the second opening (52-b) communicates with the inlet of a forced or natural air suction system (56) adapted to produce an air flow that is drawn in through the first opening (52-a), flows through the gap (24) cooling the touch screen display (30) and the light emitting diodes (31) before flowing out through the second opening (52-b).

7. Oven according to claim 6, wherein the inlet of the suction system (56) is produced by an elongated rectangular mouth (58) made in a portion of the casing that is arranged facing a portion of the frame (23) on which said second opening (52-b) is produced when the door (4) is arranged in the closed position.

8. Oven according to any one of the preceding claims, wherein said flat heat insulation (26) comprises an insulating sheet, preferably ceramic (26-a), with low heat conductivity carried by a flat aluminium heat sink (26-b) arranged facing the second sheet (21).

## Patentansprüche

1. Ofen zum Garen von Nahrungsmitteln, umfassend:
ein Trägergehäuse (1), das eine Frontöffnung (3) definiert, die von einer Tür (4) verschlossen wird, die um eine zu einer ersten Seite (4-a) der Tür (4) parallele Drehachse (6) winkelbeweglich zum Gehäuse (1) ist;
eine Innenverkleidung (8), die innerhalb des Trägergehäuses (1) aufgenommen ist und innerhalb dessen einen über die Frontöffnung (3) zugänglichen Garraum (10) definiert;
eine wärmeisolierende Schicht (12), die in dem zwischen der Innenverkleidung (8) und dem Trägergehäuse (2) definierten Spalt (14) angeordnet ist;
Heizmittel, die angepasst sind, einen Wärmestrom in Richtung des Garraums (10) zu erzeugen,
**dadurch gekennzeichnet, dass** die Tür (4) Folgendes umfasst:
eine erste innere Glasscheibe (20), die angepasst ist, während der Benutzung dem Garraum (10) zugewandt zu sein,
eine zweite äußere Glasscheibe (21), die angepasst ist, während der Benutzung der Außenseite des Ofens (1) zugewandt zu sein,
einen Trägerrahmen (23) der ersten und zweiten Scheibe (20, 21), der angepasst ist, die erste und zweite Scheibe (20, 21) parallel zueinander zu halten und dabei einen parallelflachen, in Richtung der Außenseite des Rahmens (23) geöffneten Spalt (24) zu definieren;
eine flache Wärmeisolierung (26), die innerhalb des Spalts (24) an einem ersten Abschnitt (24-a) des Spalts (24) aufgenommen ist;
eine Glaszwischenschicht (27), die mit einer innerhalb des Spalts (24) an einem zweiten Abschnitt des Spalts (24-b) aufgenommenen Wärmeisolierung versehen ist, die an einer Seite des ersten Abschnitts (24-a) angeordnet ist;
ein Touchscreen-Display (30), das innerhalb des Spalts (24) aufgenommen und zwischen der flachen Wärmeisolierung (26) und der äußeren Scheibe (21) angeordnet ist, um durch die äußere Scheibe (21) sichtbar und bedienbar zu sein;
eine Vielzahl von lichtemittierenden Dioden (31), die innerhalb des Spalts (24) aufgenommen und zwischen der Zwischenscheibe (27) und der äußeren Scheibe (21) angeordnet sind, um den Garraum (10) zu beleuchten;

2. Ofen nach Anspruch 1, wobei die zweite Glasscheibe mit einer auf einer Innenseite der zweiten Glasscheibe (21) angeordneten lichtundurchlässigen Deckschicht (32) versehen ist, die ein erstes Fenster (33), das dem Touchscreen-Display (30) zugewandt ist, und ein zweites Fenster (34), das der Zwischenscheibe (27) zugewandt ist, definiert, um den Garraum (10) von außerhalb des Ofens einsehen zu können.

3. Ofen nach Anspruch 2, wobei die erste Glasscheibe (27) mit einer auf einer Innenseite der ersten Glasscheibe (27) angeordneten lichtundurchlässigen Deckschicht (35) versehen ist, die ein drittes rechteckiges Fenster (36) mit gleichen Abmessungen des zweiten Fensters (34) definiert und diesem zugewandt ist; der Garraum (10) durch das zweite Fenster (34) und das dritte Fenster (36) sichtbar ist.

4. Ofen nach Anspruch 2 oder 3, wobei die lichtemittierenden Dioden (31) von einem im Spalt (14) aufgenommenen länglichen Träger (40) getragen werden; die lichtemittierenden Dioden (31) an einer geradlinigen Bahn (41) entlang ausgerichtet sind, die parallel zu einer geradlinigen Kante (34-a) des zweiten Fensters (34) angeordnet ist; der längliche Träger (40) einem Abschnitt der von der lichtundurchlässigen Deckschicht (32) bedeckten zweiten Scheibe (21) zugewandt ist, sodass er von außerhalb der Tür (4) nicht sichtbar ist.

5. Ofen nach Anspruch 4, wobei der längliche Träger (40) ein Reflektorelement (43) trägt, das zur Lenkung der von den Dioden abgegebenen Strahlung in Richtung der ersten Glasscheibe (20) und somit in Richtung des Garraums (10) angepasst ist.

6. Ofen nach einem beliebigen der vorhergehenden Ansprüche, wobei der Trägerrahmen (23) erste/zweite Durchgangsöffnungen (52-a/52-b) definiert, die eine Verbindung des Spalts (24) mit der Außenseite der Tür (4) erlauben; die Tür (4) in einer geschlossenen Position angeordnet ist, in der die erste Öffnung (52-a) mit der Umgebung außerhalb des Ofens (1) kommuniziert und die zweite Öffnung (52-b) mit dem Einlass eines erzwungenen oder natürlichen Luftansaugsystems (56) kommuniziert, welches angepasst ist, einen Luftstrom zu schaffen, der durch die erste Öffnung (52-a) hindurch gezogen wird, durch den Spalt (24) strömt und dabei das Touchscreen-Display (30) und die lichtemittierenden Dioden (31) kühlt, bevor er durch die zweite Öffnung (52-b) ausströmt.

7. Ofen nach Anspruch 6, wobei der Einlass des Ansaugsystems (56) durch ein in einem Abschnitt des Gehäuses hergestelltes, längliches, rechteckiges Mundstück (58) gefertigt wird, das so angeordnet ist, dass es einem Abschnitt des Rahmens (23) zugewandt ist, an dem die zweite Öffnung (52-b) gefertigt wird, wenn die Tür (4) in der geschlossenen Position angeordnet ist.

8. Ofen nach einem beliebigen der vorhergehenden Ansprüche, wobei die flache Wärmeisolierung (26) eine Isolierscheibe, vorzugsweise Keramik (26-a), mit geringer Wärmeleitfähigkeit umfasst, die von einem flachen Aluminium-Wärmeableiter (26-b) getragen wird, der angeordnet ist, der zweiten Scheibe (21) zugewandt zu sein.

## Revendications

1. Four de cuisson pour aliments, comprenant :
Un boîtier de support (1) définissant une ouverture avant (3) fermée par une porte (4) mobile de façon angulaire par rapport au boîtier (1) autour d'un axe de rotation (6) parallèle à un premier côté (4-a) de la porte (4) ;
un couvercle interne (8) logé à l'intérieur du boîtier de support (1) et définissant sur l'intérieur de celui-ci une chambre de cuisson (10) accessible au travers de l'ouverture avant (3) ;
une couche d'isolation thermique (12) agencée dans l'espace (14) défini entre le couvercle interne (8) et le boîtier de support (2) ;
des moyens de chauffage adaptés pour générer un flux de chaleur vers la chambre de cuisson (10),
**caractérisé en ce que** ladite porte (4) comprend :
une première feuille de verre intérieure (20) adaptée, lors de l'utilisation, pour être en regard de la chambre de cuisson (10) ;
une seconde feuille de verre extérieure (21) adaptée, lors de l'utilisation pour être en regard de l'extérieur du four (1) ;
un cadre de support (23) de la première et de la seconde feuille (20, 21) adapté pour maintenir les première et seconde feuilles (20, 21) parallèles l'une par rapport à l'autre définissant un espace parallélépipédique (24) ouvert en direction de l'extérieur du cadre (23) ;
une isolation thermique plate (26) logée à l'intérieur de l'espace (24) au niveau d'une première partie (24-a) de l'espace (24) ;
une feuille de verre intermédiaire (27) dotée d'une isolation thermique logée à l'intérieur de l'espace (24) au niveau d'une seconde partie de l'espace (24-b) agencé sur un côté de la première partie (24-a) ;
un affichage à écran tactile (30) logé à l'intérieur de l'espace (24) et agencé entre l'isolation thermique plate (26) et la feuille extérieure (21) pour être visible et actionnable au travers de la feuille extérieure (21) ;
une pluralité de diodes électroluminescentes (31) logées à l'intérieur de l'espace (24) et agencées entre la feuille intermédiaire (27) et la feuille extérieure (21) pour éclairer la chambre de cuisson (10).

2. Four selon la revendication 1, dans lequel la seconde feuille de verre est dotée d'une couche de couverture (32) opaque à la lumière agencée sur une face intérieure de la seconde feuille de verre (21) qui définit une première fenêtre (33) en regard de l'affichage à écran tactile (30) et une deuxième fenêtre (34) en regard de la feuille intermédiaire (27) pour permettre une visualisation de la chambre de cuisson (10) depuis l'extérieur du four.

3. Four selon la revendication 2, dans lequel la première feuille de verre (27) est dotée d'une couche de couverture (35) opaque à la lumière agencée sur une face intérieure de la première feuille de verre (27) qui définit une troisième fenêtre rectangulaire (36) ayant les mêmes dimensions que la deuxième fenêtre (34) et est en regard de celle-ci ; la chambre de cuisson (10) est visible au travers de la deuxième fenêtre (34) et de la troisième fenêtre (36).

4. Four selon la revendication 2 ou 3, dans lequel les diodes électroluminescentes (31) sont portées par un support allongé (40) logé dans l'espace (14) ; les diodes électroluminescentes (31) sont alignées le long d'un chemin rectiligne (41) qui est agencée parallèlement à un bord rectiligne (34-a) de la deuxième fenêtre (34) ; le support allongé (40) est en regard d'une partie de la seconde feuille (21) recouverte par la couche de couverture opaque à la lumière (32) de sorte qu'elle n'est pas visible de l'extérieur de la porte (4).

5. Four selon la revendication 4, dans lequel le support allongé (40) porte un élément réfléchissant (43) adapté pour diriger le rayonnement émis par les diodes en direction de la première feuille de verre (20) et par conséquent, en direction de la chambre de cuisson (10).

6. Four selon l'une quelconque des revendications précédentes, dans lequel le cadre de support (23) définit des première/seconde ouvertures traversantes (52-a/52-b) qui permettent de relier l'espace (24) avec l'extérieur de la porte (4) ; la porte (4) est agencée dans une position fermée dans laquelle la première ouverture (52-a) communique avec l'environnement extérieur au four (1) et la seconde ouverture (52-b) communique avec l'entrée d'un système d'aspiration d'air forcé ou naturel (56) adapté pour produire un flux d'air qui est aspiré au travers de la première ouverture (52-a), s'écoule au travers de l'espace (24) refroidissant l'affichage à écran tactile (30) et les diodes électroluminescentes (31) avant de s'écouler au travers de la seconde ouverture (52-b).

7. Four selon la revendication 6, dans lequel l'entrée du système d'aspiration (56) est produite par une bouche rectangulaire allongée (58) formée dans une partie du boîtier qui est agencée en regard d'une partie du cadre (23) sur laquelle ladite seconde ouverture (52-b) est produite lorsque la porte (4) est agencée dans la position fermée.

8. Four selon l'une quelconque des revendications précédentes, dans lequel ladite isolation thermique plate (26) comprend une feuille isolante, de préférence en céramique (26-a), présentant une faible conductivité thermique réalisée par un radiateur en aluminium plat (26-b) agencé en regard de la seconde feuille (21).
